# EUROPÄISCHE PATENTSCHRIFT

(11) **EP 0 982 196 B1**
(45) Veröffentlichungstag und Bekanntmachung des Hinweises auf die Patenterteilung: **02.11.2006**
(21) Anmeldenummer: 99110531.3
(22) Anmeldetag: 01.06.1999
(51) Int. Cl.: B60R 19/48

(54) **Einrichtung zur beschädigungsgeschützten Anordnung eines Sensiermittels an einem Fahrzeug**
Device for the damage-proof arrangement of a sensing means on a vehicle
Dispositif pour protéger contre les déteriorations un détecteur sur un véhicule

(30) Priorität: 25.08.1998 DE 19838584
(43) Veröffentlichungstag der Anmeldung: 01.03.2000
(73) Patentinhaber: WABCO GmbH & Co. OHG, 30453 Hannover (DE)
(72) Erfinder: Gassauer, Stephan, 99768 Ilfeld (DE); Pietsch, Frank, 30952 Ronnenberg (DE)
(74) Vertreter: Schrödter, Manfred

(56) Entgegenhaltungen:
- DE-A- 3 812 182
- DE-A- 19 528 474
- DE-A- 19 626 291
- US-A- 4 636 997

## Beschreibung

Die Erfindung betrifft eine Einrichtung zur beschädigungsgeschützten Anordnung eines Sensiermittels, insbesondere eines Abstandssensors, an einem Fahrzeug.

Bei der Anordnung von empfindlichen Sensiermitteln insbesondere an exponierten Stellen eines Fahrzeuges ist es erforderlich, das Sensiermittel sicher vor Beschädigungen an dem Fahrzeug anzubringen. Zudem sollte die Anbringung in einfacher Weise, d. h. mit möglichst geringem Montageaufwand, möglich sein. So werden beispielsweise seit einiger Zeit Abstandssensoren, mit denen unter Zuhilfenahme einer elektronischen Auswerteschaltung dem Fahrer eines Fahrzeuges der Abstand zu einem Hindernis angezeigt wird, vorzugsweise in Stoßfängern von Personenkraftwagen angebracht. Da derartige Stoßfänger relativ leicht verformbar sind, kann bei einer Berührung mit einem Hindernis der Abstandssensor beschädigt werden. Wegen der Anbringung des Abstandssensors in dem Stoßfänger ist ein Auswechseln eines beschädigten Abstandssensors mit großem Montageaufwand verbunden und relativ teuer. In einigen Fällen muß dann der gesamte Stoßfänger ausgewechselt werden.

Aus der US 4,636,997 ist ein Ultraschallwandler mit einem zylinderförmigen Gehäuse bekannt, welches in die hintere Stoßstange eines Fahrzeuges eingelassen und nach hinten geöffnet ist. Weiterhin ist eine reflektierende Platte mit parabolischer reflektierender Oberfläche vorgesehen, die innerhalb des zylinderförmigen Gehäuses im Bereich der geschlossenen Seite angeordnet ist und der offenen Seite zugewandt ist, sowie ein Ultraschall-Vibrator zum Aussenden und Empfangen von Ultraschallwellen, der in einer oberen Wand des Gehäuses im Brennpunkt der reflektierenden Platte angebracht ist.

Der Erfindung liegt daher die Aufgabe zugrunde, eine Einrichtung anzugeben, mittels der ein Sensiermittel in einfacher Weise an exponierter Stelle in einem Fahrzeug angebracht werden kann und die das Sensiermittel vor Beschädigung sicherer schützt.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Die Erfindung ist für alle Arten von Sensiermitteln geeignet. Besonders vorteilhaft ist jedoch die Anwendung der Erfindung bei wellen- oder strahlenartige Signale aussendenden oder empfangenden Sensiermitteln, z. B. optischen oder akustischen Sensoren. Als spezielle Anwendungsfälle seien Ultraschallsensoren, Infrarot- Sende- oder Empfangssensoren bzw. Lichtschranken oder auch Drucksensoren genannt.

Die erfindungsgemäße Einrichtung weist einen Rammpuffer auf, welcher aus einem elastischen Material, z. B. Gummi, besteht und der zur Montage an einem Fahrzeug vorgesehen ist. In vorteilhafter Weise kann hierfür ein handelsüblicher Rammpuffer verwendet werden, der, wie folgendem beschrieben, modifiziert wird. Der Rammpuffer weist eine Aufprallfläche auf, die für ein Aufprall auf ein Hindernis vorgesehen ist und bei korrekter Montage des Rammpuffers an dem Fahrzeug von dem

Fahrzeug fortweist, und zwar in eine sogenannte Aufprallrichtung. In dem Rammpuffer ist eine Aussparung vorgesehen, die die Aufprallfläche durchdringt. Das Sensiermittel ist dann, entgegen der Aufprallrichtung betrachtet, hinter der Aufprallfläche angeordnet, z. B. in dem von der Aussparung gebildeten Hohlraum.

In einer vorteilhaften Weiterbildung der Erfindung durchdringt die Aussparung den Rammpuffer vollständig. In diesem Fall kann das Sensiermittel dann wahlweise in dem von der Aussparung gebildeten Hohlraum oder auf der der Aufprallfläche abgewandten Seite des Rammpuffers, d. h. hinter dem Rammpuffer, angeordnet sein.

Durch die Anordnung des Sensiermittels hinter der Aufprallfläche ist dieses besonders gut gegen Beschädigungen infolge eines Aufpralls geschützt. Je nach spezifischer Härte des Materials, aus dem der Rammpuffer gefertigt ist, ist die Vorderseite des Sensiermittels mehr oder weniger weit hinter der Aufprallfläche anzuordnen. Die genaue Position ist je nach Bedarf durch Versuche zu ermitteln.

In einer vorteilhaften Weiterbildung der Erfindung ist die lichte Weite der Aussparung in dem Rammpuffer größer als die Außenabmessungen des Sensiermittels, so daß das Sensiermittel nicht an der Wandung der Aussparung anliegt, sondern ein vorgegebenes Spiel hat. Dies hat den Vorteil, daß ein gewisser Freiraum für eine elastische Verformung des Rammpuffer-Materials infolge eines Aufpralls zur Verfügung steht und das Sensiermittel hierbei mechanisch nicht belastet wird. Ein weiterer Vorteil ist, daß in dem sich zwischen dem Sensiermittel und der Wandung der Aussparung ergebenden Freiraum eine Dichtung angeordnet werden kann, welche empfindliche Teile des Sensiermittels vor Umwelteinflüssen schützt. Eine solche Dichtung ist dann vorzugsweise aus einem weichelastischen Material auszuführen.

Gemäß einer weiteren vorteilhaften Weiterbildung der Erfindung verjüngt sich die Aussparung von der Aufprallfläche an entgegen der Aufprallrichtung. Im Falle einer Aussparung mit rundem Querschnitt kann die Aufprallfläche dann vorzugsweise eine konische Form aufweisen. Bei Einsatz eines Abstandssensors als Sensiermittel ist dieses in der Regel derart angeordnet, daß die Sensierrichtung in Aufprallrichtung verläuft, d. h. im wesentlichen parallel zur Fahrbahn bzw. Erdoberfläche ist. Infolge dessen verläuft auch die Mittelachse der Aussparung im wesentlichen parallel zur Fahrbahn. Durch die sich verjüngende Kontur der Aussparung kann in die Aussparung gelangtes Spritzwasser leichter wieder abfließen.

Bei akustischen Sensiermitteln, z. B. Ultraschallsensoren, hat die zuvor erwähnte Art der Weiterbildung den zusätzlichen Vorteil, daß die Aussendung von Schallwellen günstig beeinflußt wird, da eine Reflexion der Schallwellen an der Wandung der Aussparung, insbesondere in der Nähe der Aufprallfläche, deutlich verringert wird.

Durch eine weitere vorteilhafte Weiterbildung der Erfindung, gemäß der die Aussparung im Bereich der Aufprallfläche eine umlaufende Fase oder einen umlaufenden Radius aufweist, können derartige unerwünschte Reflexionen des Schallsignals noch weiter reduziert werden.

Die erfindungsgemäße Einrichtung wird vorzugsweise in Nutzfahrzeugen, z. B. Lastkraftwagen und Anhängern, eingesetzt. Hierbei kommt es relativ häufig vor, daß das Fahrzeug an einer Laderampe Be- oder Entladen wird. Wenn hierbei der Rammpuffer Teile der Laderampe berührt, kommt es infolge einer Ab- oder Aufwärtsbewegung beim Be- oder Entladen zu einem Abrieb des Gummimaterials, wodurch sich an der Aussparung im Bereich der Aufprallfläche dann ein Grat bilden kann. Hierdurch können ebenfalls unerwünschte Schallreflexionen auftreten. Bei Anwendung der zuvor erwähnten Weiterbildung der Erfindung bildet sich dieser Grat dann in vorteilhafter Weise nicht in dem von den ausgesendeten Schallwellen erfaßten Bereich.

Gemäß der Erfindung sind eine kanalartige Aussparung zur Aufnahme eines elektrischen Anschlußkabels für das Sensiermittel sowie auf der der Aufprallfläche abgewandten Seite des Rammpuffers eine Montagefläche zur Montage an dem Fahrzeug vorgesehen, in der eine die Aussparung wenigstens zum Teil umgebende Abstufung zur Aufnahme eines Montageflansches des Sensiermittels vorgesehen ist. Die Abstufung hat vorzugsweise eine zu der Form des Montageflansches korrespondierende Kontur. Hierdurch ist eine besonders einfache und schnelle Montage des Sensiermittels möglich, indem dieses zunächst lose in den Rammpuffer gelegt wird und dieser dann an dem Fahrzeug z. B. durch Verschrauben befestigt wird. Ein zusätzlicher Arbeitsschritt zur Befestigung des Sensiermittels an dem Fahrzeug oder dem Rammpuffer ist nicht erforderlich.

In einer weiteren vorteilhaften Weiterbildung der Erfindung weist die Aussparung wenigstens zum Teil eine strahlenbündelnde Kontur auf. Insbesondere kommt als strahlenbündelnde Kontur ein Teil eines Kegelschnittes, z. B. eine Parabel oder Ellipse, in Frage. Hierdurch können sehr einfach aufgebaute, preisgünstige Sensiermittel verwendet werden, die keine eigenen strahlenbündelnden Mittel aufweisen.

In einer weiteren vorteilhaften Weiterbildung der Erfindung ist die Aufprallfläche mit einem Schutzmittel gegen Abrieb versehen. Wie bereits erwähnt, kann ein solcher Abrieb besonders bei an einer Laderampe zu be- oder entladenden Fahrzeugen auftreten. Als Schutzmittel kann in vorteilhafter Weise eine Platte aus einem abriebfesten Werkstoff, wie z. B. Kunststoff oder Metall, verwendet werden, die einen Durchbruch aufweist, welcher im wesentlichen mit der Aussparung in dem Rammpuffer fluchtet.

Es ist auch vorteilhaft, als Schutzmittel eine Beschichtung der Aufprallfläche vorzusehen und als Beschichtungsmaterial ein Kunststoff- oder Metallmaterial zu verwenden. Hierdurch ist das Schutzmittel besonders preisgünstig herzustellen und an dem Rammpuffer anzubringen, z. B. durch Eintauchen des Rammpuffers in das Schutzmittel. Eine gesonderte Montage des Schutzmittels entfällt dann außerdem.

Vorteilhaft ist insbesondere die Verwendung von Teflon als Beschichtungsmaterial, da dieses sehr widerstandsfähig gegen Abrieb ist und zudem einen geringen Reibungswiderstand bietet. Es ist auch möglich, die erwähnte Platte mit einer derartigen Beschichtung zu versehen.

Die Erfindung wird im folgenden anhand von Ausführungsbeispielen unter Zuhilfenahme von Zeichnungen näher erläutert.

Es zeigen
- Fig. 1: eine Draufsicht auf ein erstes Ausführungsbeispiel der erfindungsgemäßen Einrichtung und
- Fig. 2: eine seitliche Querschnittsansicht der Einrichtung gemäß Fig. 1 und
- Fig. 3: den Rammpuffer gemäß Fig. 1 ohne Sensiermittel aus einer der Draufsicht entgegengesetzten Richtung und
- Fig. 4: eine Querschnittsansicht des Rammpuffers gemäß Fig. 2 ohne Sensiermittel und
- Fig. 5: ein zweites Ausführungsbeispiel der erfindungsgemäßen Einrichtung in einer Querschnittsansicht ähnlich der Fig. 2 und
- Fig. 6: ein drittes Ausführungsbeispiel der erfindungsgemäßen Einrichtung in einer Querschnittsansicht ähnlich der Fig. 2 und
- Fig. 7 und 8: eine Anordnungsmöglichkeit der erfindungsgemäßen Einrichtung an einer exponierten Stelle eines Fahrzeuges.

In den Figuren werden gleiche Bezugszeichen für einander entsprechende Teile verwendet.

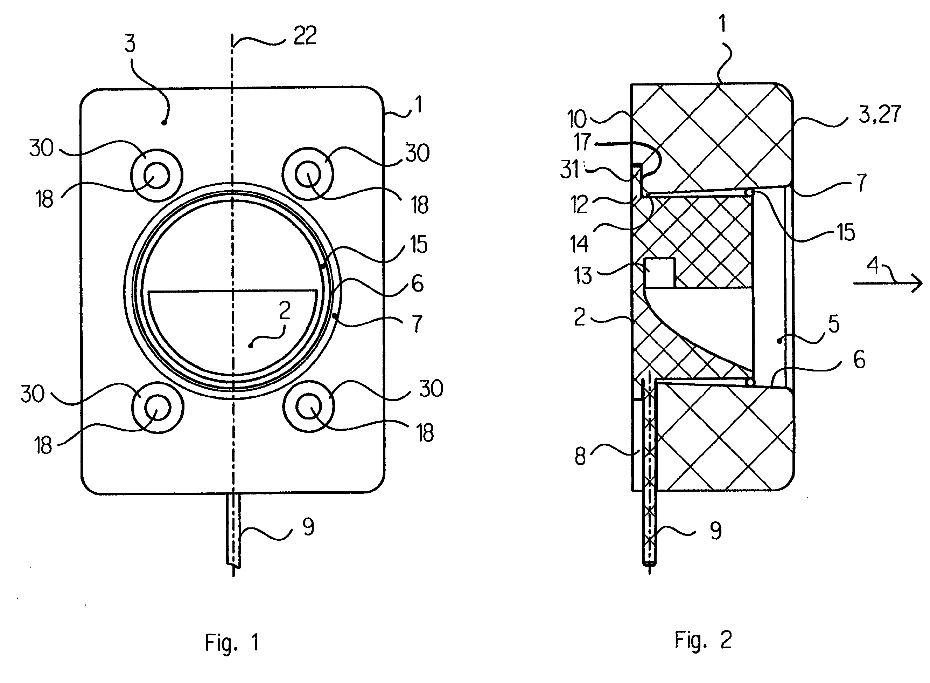

Die Fig. 1 und 2 zeigen ein erstes Ausführungsbeispiel der erfindungsgemäßen Einrichtung, bestehend aus einem Rammpuffer (1), mit einem darin angeordneten Sensiermittel (2). Der Rammpuffer (1) ist vorzugsweise aus Hartgummi gefertigt. Als Sensiermittel (2) wird vorzugsweise ein dem Fachmann geläufiger schallfeldmodulierter Ultraschallsensor eingesetzt. Hiermit ist es in Verbindung mit einer geeigneten Auswerteschaltung möglich, einen Abstand zu einem Hindernis bis zu einer Entfernung von z. B. 5 Metern zu erfassen.

Die Fig. 2 stellt eine Seitenansicht eines Längsschnittes gemäß der Linie (22) durch den in der Fig. 1 als Draufsicht dargestellten Rammpuffer (1) nebst Sensiermittel (2) dar. Mittels des Pfeils (4) wird die Richtung dargestellt, in der sich die dargestellte Anordnung einem nicht dargestellten Hindernis nähert. Diese als Aufprallrichtung (4) bezeichnete Richtung entspricht außerdem der Sensierrichtung des Sensiermittels (2).

Der Rammpuffer (1) weist eine Aufprallfläche (3) auf, die für einen Aufprall auf das Hindernis vorgesehen ist. Für eine Montage an einem Fahrzeug, z. B. an der rückwärtigen Seite eines Aufliegers oder Anhängers, weist der Rammpuffer (1) eine der Aufprallfläche (3) abgewandte Seite (10) auf, die als Montagefläche dient. Außerdem ist der Rammpuffer (1) mit Bohrungen (18) versehen, mittels derer eine Befestigung an dem Fahrzeug durch Schrauben erfolgen kann. Die Bohrungen (18) weisen an der Aufprallfläche (3) Senkungen (30) zur Aufnahme von Schraubenköpfen auf.

In einer in diesem Ausführungsbeispiel den Rammpuffer (1) vollständig durchdringenden Aussparung (5), welche sich von der Aufprallfläche (3) an entgegen der Aufprallrichtung (4) stetig konisch verjüngt, ist das Sensiermittel (2) angeordnet. Die Aussparung (5) weist im Bereich der Aufprallfläche (3) einen umlaufenden Radius (7) auf. Zwischen der Außenwand des Sensiermittels (2) und der Wandung (6) der Aussparung (5) ist eine als O-Ring ausgebildete Dichtung (15) aus einem relativ weichen Material, z. B. Silikon, angeordnet. Zur Zentrierung des Sensiermittels (2) in der Aussparung (5) weist der Rammpuffer zusätzlich an der Wandung (6) angeordnete, über den Umfang der Aussparung (5) verteilte und als Zentriermittel dienende Zentriernasen (14) auf, welche zudem das Sensiermittel (2) fixieren.

Das Sensiermittel (2) besteht aus einem speziell geformten Gehäuse, welches strahlenbündelnde Eigenschaften aufweist, und einem Wandlerelement (13), daß bei Eingabe elektrischer Signale Schallwellen aussendet und bei Empfang von Schallwellen entsprechende elektrische Signale erzeugt. Zur Übertragung der elektrischen Signale ist das Sensiermittel (2) mit einem elektrischen Anschlußkabel (9) versehen, welches mit einer nicht dargestellten Auswerteschaltung verbunden werden kann.

Zur Unterbringung und Führung des Anschlußkabels (9) ist der Rammpuffer (1) mit einer kanalartigen Aussparung (8) versehen, in der das Anschlußkabel (9) verlegt ist.

Das Sensiermittel (2) weist zudem einen Montageflansch (12) auf, für dessen Aufnahme in dem Rammpuffer (1) eine Abstufung (11) vorgesehen ist. Das in den Fig. 1 bis 4 dargestellte Sensiermittel (2) weist ein im wesentlichen kreiszylinderförmiges Gehäuse mit einem konzentrisch zum Gehäuse angeordneten Montageflansch (12) auf, der mit einem sich über den Durchmesser des Montageflanschs (12) hinaus erstreckenden Vorsprung (31) versehen ist, welcher zur Verdrehsicherung des Sensiermittels (2) gegenüber dem Rammpuffer (1) dient.

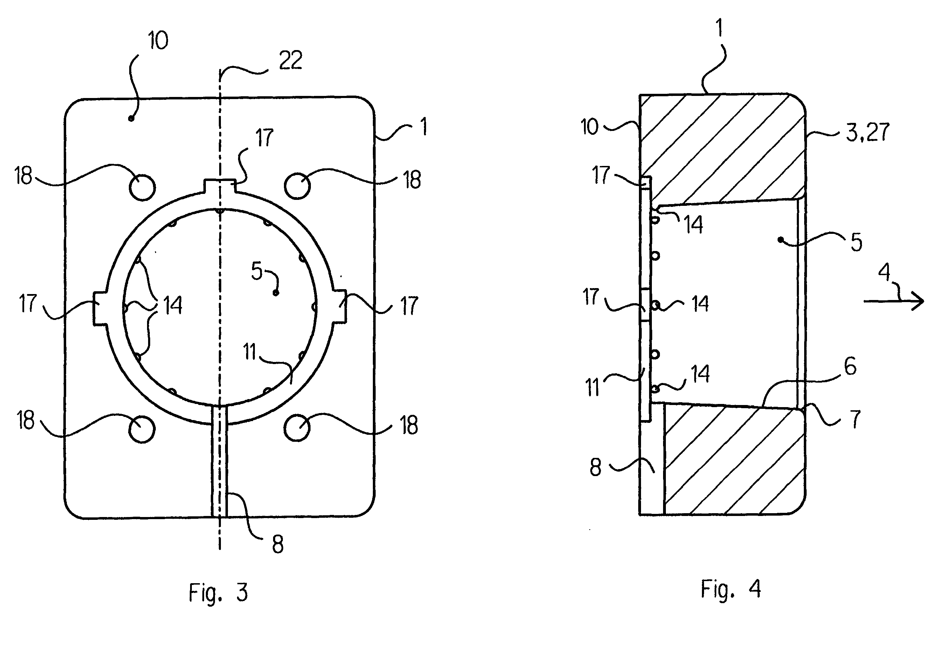

In den Fig. 3 und 4 ist der Rammpuffer (1) ohne das Sensiermittel (2) dargestellt.

Wie insbesondere aus der Fig. 3, die den Rammpuffer (1) von der der Aufprallfläche abgewandten Montagefläche (10) zeigt, erkennbar ist, sind in dem Rammpuffer (1) im Bereich der Abstufung (11) gemäß einer bevorzugten Ausgestaltung der Erfindung drei um jeweils 90 Grad versetzt angeordnete Aussparungen (17) zur Aufnahme des Vorsprungs (31) vorgesehen. Hierdurch ist es möglich, den Rammpuffer (1) unter Beibehaltung einer bevorzugten Einbaulage des Sensiermittels (2) in verschiedenen, um jeweils 90 Grad versetzten Einbaulagen zu montieren. Dabei wirkt jeweils eine der Aussparungen (17) in Verbindung mit dem Vorsprung (31) als Verdrehsicherungsmittel.

Vor der Montage des Rammpuffers (1) wird das Sensiermittel (2) einfach in die gewünschte der drei möglichen Winkelpositionen gedreht und dann in den Rammpuffer (1) hineingedrückt. Das Sensiermittel (2) ist dann durch die Zentriernasen (14) einerseits zentriert angeordnet und andererseits gegen Herausfallen geschützt und darüber hinaus durch die Verdrehsicherungsmittel (17, 31) gegen Verdrehen gesichert. Das elektrische Anschlußkabel (9) ist je nach Auswahl der Winkelposition dann zum Teil in der Abstufung (11) verlegt. Es ist auch möglich, zur Kabelführung mehrere kanalartige Aussparungen von der Art der Aussparung (8) vorzusehen, die entsprechend den möglichen Einbaulagen des Sensiermittels (2) vorzugsweise ebenfalls um jeweils 90 Grad versetzt angeordnet sind.

Es wäre auch möglich, ein Sensiermittel mit einem ebenfalls runden Gehäuse mit das Gehäuse bogenförmig oder rechteckig umgebenden, konzentrisch zu dem Gehäuse angeordneten Montageflanschen einzusetzen. Dann könnte die Abstufung (11) beispielsweise aus kreisabschnittsartig angeordneten Aussparungen in dem Rammpuffer (1) bestehen. In diesem Fall wäre das Sensiermittel (2) ebenfalls verdrehsicher in dem Rammpuffer (1) anzuordnen.
Die Aufprallfläche (3) ist in dem Ausführungsbeispiel gemäß den Fig. 1 bis 4 mit einer relativ dünnen Beschichtung (27) mit einem Kunststoff- oder Metallmaterial zur Vermeidung von Abrieb versehen.

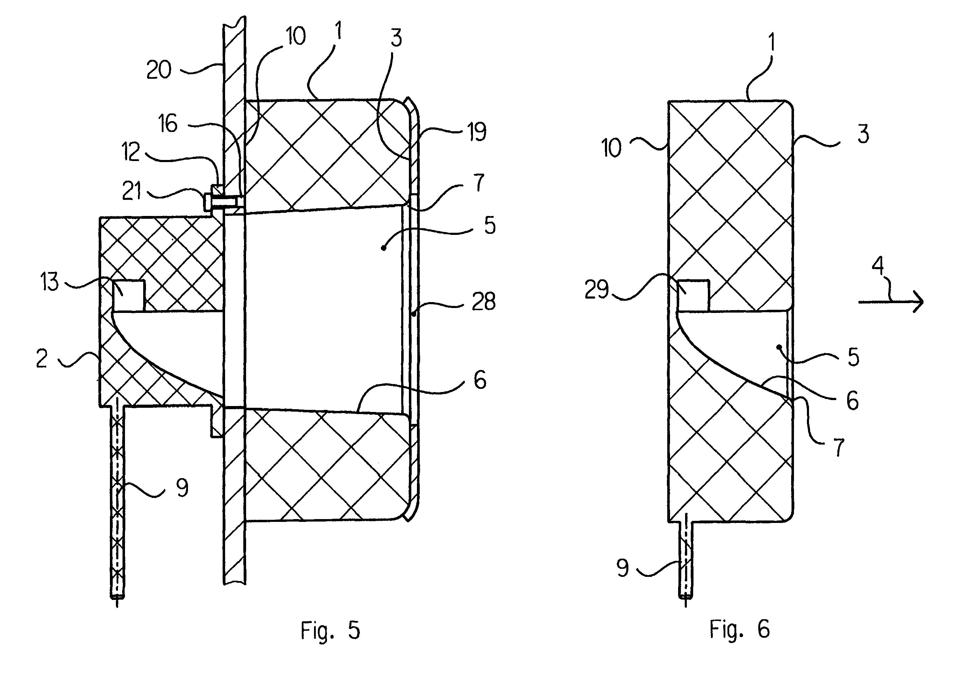

In einem zweiten Ausführungsbeispiel gemäß Fig. 5 weist die erfindungsgemäße Einrichtung neben dem Rammpuffer (1) noch eine Metallplatte (19) auf, die auf der Aufprallfläche (3) angeordnet ist und diese größtenteils abdeckt. Hierdurch wird die Aufprallfläche (3) vor Abrieb geschützt. Die Metallplatte (19) ist mit einem Durchbruch (28) versehen, welcher konzentrisch zu der Aussparung (5) angeordnet ist, so daß von dem Sensiermittel (2) ausgesendete Schallwellen bzw. zu empfangende Schallwellen ungehindert passieren können. Die Metallplatte (19) kann mit dem Rammpuffer (1) beispielsweise durch Verkleben, Vulkanisieren oder Verschrauben verbunden werden.

Ein weiterer Unterschied zu dem ersten Ausführungsbeispiel der Erfindung besteht darin, daß gemäß Fig. 5 das Sensiermittel (2) nicht innerhalb der Aussparung (5) des Rammpuffers (1) angeordnet ist, sondern hinter dem Rammpuffer (1) an einem den Rammpuffer (1) tragenden Teil (20) des Fahrzeuges. Der Rammpuffer (1) liegt hierbei mit seiner der Aufprallfläche (3) abgewandten Montagefläche (10) an dem Teil (20) des Fahrzeuges an. Zur Befestigung des Sensiermittels (2) sind Schrauben (21) vorgesehen, welche durch über den Umfangs des Montageflanschs (12) verteilte Bohrungen geführt sind und in mit einem Gewinde versehene Bohrungen (16) in dem Teil (20) des Fahrzeuges eingeschraubt sind. Die Schrauben (21) dienen in Verbindung mit den Bohrungen (16) außerdem als Verdrehsicherungsmittel zur Verhinderung einer Verdrehung des Sensiermittels (2) gegenüber dem Rammpuffer (1).

In einem dritten Ausführungsbeispiel der Erfindung gemäß Fig. 6 wird statt des zuvor beschriebenen Sensiermittels (2) ein vergleichsweise preisgünstiges Wandlerelement (29), welches von dem gleichen Typ sein kann wie das in das Sensiermittel (2) integrierte Wandlerelement (13), verwendet. Das Wandlerelement (29) ist dabei in das Material des Rammpuffers (1) eingebettet. Die bei den vorherigen Ausführungsbeispielen in dem Sensiermittel (2) vorgesehene strahlenbündelnde Kontur ist gemäß Fig. 6 direkt als Aussparung (5) mit strahlenbündelnder Kontur einstückig mit dem Rammpuffer (1) ausgeführt. Ein derartiger Rammpuffer wird z. B. mittels eines geeigneten Werkzeuges als Formteil hergestellt. Die Kontur weist vorzugsweise einen parabel- oder ellipsenförmigen Querschnitt auf.

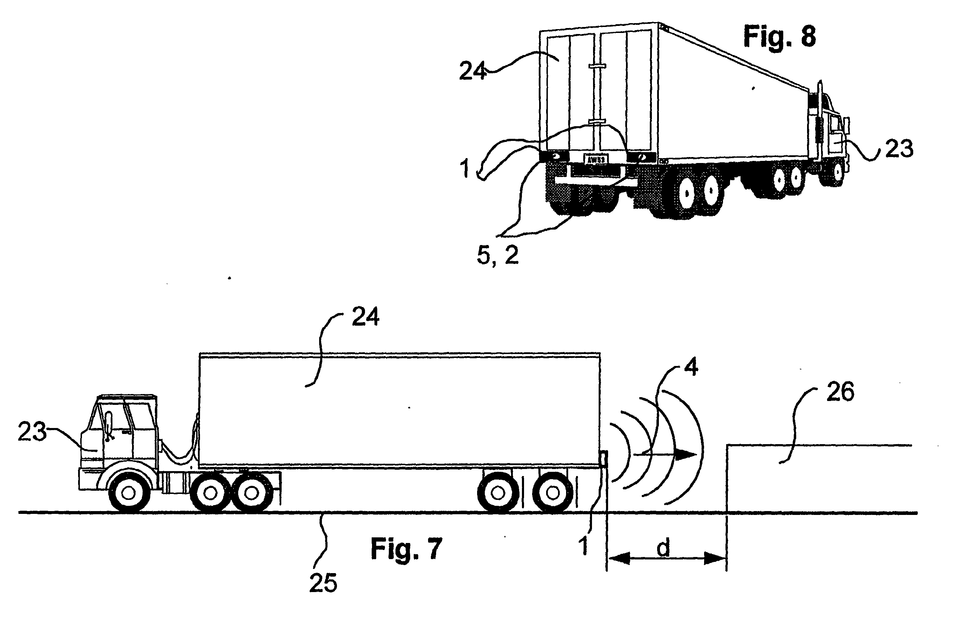

In den Fig. 7 und 8 wird beispielhaft eine bevorzugte Anordnungsmöglichkeit für die erfindungsgemäße Einrichtung sowie das Sensiermittel dargestellt. Ein Fahrzeug, bestehend aus einer Sattelzugmaschine (23) und einem Auflieger (24), bewegt sich auf einer Fahrbahn (25) in Aufprallrichtung (4) auf ein Hindernis (26) zu. Am Heck des Aufliegers (24) sind zwei Rammpuffer (1) mit in den jeweiligen Aussparungen (5) angeordneten Sensiermitteln (2) angebracht. Die Sensiermittel (2) sind hierdurch in der Lage, ein einen Abstand (d) des Sensiermittels (2) zu dem Hindernis (26) repräsentierendes Signal an eine elektronische Auswerteschaltung (nicht dargestellt) abzugeben. Die Auswerteschaltung kann die hierbei gewonnene Abstandsinformation dann z. B. auf einer in der Sattelzugmaschine (23) im Blickfeld des Fahrers angeordneten Anzeigeeinrichtung darstellen.

Ein besonderer Vorteil dieser Art der Anordnung des Sensiermittels (2) im Bereich der Aussparung (5) in dem Rammpuffer (1) besteht darin, daß Meßfehler bei der Abstandsmessung minimiert werden, da eine Messung von derjenigen Stelle aus erfolgt, die für die Berührung mit dem Hindernis (26) vorgesehen ist, nämlich von der Aufprallfläche (3) aus. Hierdurch kann der Abstand der Aufprallfläche (3) zu dem Hindernis (26) sehr genau gemessen werden.

## Patentansprüche

1. Einrichtung zur Anordnung eines Sensiermittels (2) an einem Fahrzeug (23, 24), aufweisend einen Rammpuffer (1) aus einem elastischen Material, mit einer für einen Aufprall auf ein Hindernis vorgesehenen Aufprallfläche (3) und einer die Aufprallfläche (3) durchdringenden Aussparung (5), die für die Anordnung des Sensiermittels (2) hinter der Aufprallfläche (3) entgegen der Aufprallrichtung (4) geeignet ist, wobei die Aussparung (5) den Rammpuffer (1) entgegen der Aufprallrichtung (4) vollständig durchdringt, **dadurch gekennzeichnet, daß** auf der der Aufprallfläche (3) abgewandten Seite des Rammpuffers (1) eine Montagefläche (10) zur Montage an dem Fahrzeug (23, 24) vorgesehen ist, in der eine die Aussparung (5) wenigstens zum Teil umgebende Abstufung (11) zur Aufnahme eines Montageflansches (12) des Sensiermittels (2) vorgesehen ist.

2. Einrichtung nach Anspruch 1, **dadurch gekennzeichnet, daß** die lichte Weite der Aussparung (5) größer ist als die Außenabmessungen des Sensiermittels (2).

3. Einrichtung nach einem der vorhergehenden Ansprüche, **dadurch gekennzeichnet, daß** sich die Aussparung (5) von der Aufprallfläche (3) an entgegen der Aufprallrichtung (4) verjüngt.

4. Einrichtung nach einem der vorhergehenden Ansprüche, **dadurch gekennzeichnet, daß** die Aussparung (5) im Bereich der Aufprallfläche (3) eine um-Iaufende Fase oder einen umlaufenden Radius (7) aufweist.

5. Einrichtung nach einem der vorhergehenden Ansprüche, **dadurch gekennzeichnet, daß** eine kanalartige Aussparung (8) zur Aufnahme eines elektrischen Anschlußkabels (9) für das Sensiermittel (2) vorgesehen ist.

6. Einrichtung nach einem der vorhergehenden Ansprüche, **dadurch gekennzeichnet, daß** im Bereich der Abstufung (11) Verdrehsicherungsmittel (16, 17, 21, 31) zur Verhinderung einer Verdrehung des Sensiermittels (2) gegenüber dem Rammpuffer (1) vorgesehen sind.

7. Einrichtung nach einem der vorhergehenden Ansprüche, **dadurch gekennzeichnet, daß** die Aussparung (5) wenigstens zum Teil eine strahlenbündelnde Kontur, insbesondere einen Teil eines Kegelschnittes, aufweist.

8. Einrichtung nach einem der vorhergehenden Ansprüche, **dadurch gekennzeichnet, daß** in der Aussparung (5) Zentriermittel (14) zur Zentrierung des Sensiermittels (2) innerhalb der Aussparung (5) vorgesehen sind.

9. Einrichtung nach einem der vorhergehenden Ansprüche, **dadurch gekennzeichnet, daß** die Aufprallfläche (3) mit einem Schutzmittel (19, 27) gegen Abrieb versehen ist.

10. Einrichtung nach Anspruch 9, **dadurch gekennzeichnet, daß** als Schutzmittel eine mit einem Durchbruch (28) versehene Platte aus einem abriebfesten Werkstoff (19), insbesondere Kunststoff oder Metall, verwendet wird, die so angeordnet ist, daß die Aussparung (5) in dem Rammpuffer (1) im Bereich des Durchbruchs (28) angeordnet ist.

11. Einrichtung nach Anspruch 9, **dadurch gekennzeichnet, daß** das Schutzmittel aus einer Beschichtung (27) der Aufprallfläche mit einem Kunststoff- oder Metallmaterial besteht.

## Claims

1. Device for arranging a sensing means (2) on a vehicle (23, 24), which device comprises an impact buffer (1) which is made of a resilient material and has a collision face (3), provided for a collision with an obstacle, and a recess (5) which passes through the collision face (3) and is suitable for the arrangement of the sensing means (2) behind the collision face (3), viewed in the opposite direction to the collision direction (4), the recess (5) passing completely through the impact buffer (1), viewed in the opposite direction to the collision direction (4), **characterised in that** a mounting surface (10) for mounting on the vehicle (23, 24) is provided on the side of the impact buffer (1) that is remote from the collision face (3), in which mounting surface (10) there is provided a stepped portion (11), which surrounds the recess (5) at least partly, for receiving a mounting flange (12) of the sensing means (2).

2. Device according to claim 1, **characterised in that** the inside width of the recess (5) is greater than the outside dimensions of the sensing means (2).

3. Device according to either of the preceding claims, **characterised in that** the recess (5) tapers from the collision face (3) in the opposite direction to the collision direction (4).

4. Device according to any one of the preceding claims, **characterised in that** the recess (5) has in the region of the collision face (3) a circumferential bevel or a circumferential radius (7).

5. Device according to any one of the preceding claims, **characterised in that** a channel-like recess (8) is provided for accommodating an electrical connection cable (9) for the sensing means (2).

6. Device according to any one of the preceding claims, **characterised in that** locking means (16, 17, 21, 31) are provided in the region of the stepped portion (11) for preventing rotation of the sensing means (2) relative to the impact buffer (1).

7. Device according to any one of the preceding claims, **characterised in that** at least part of the recess (5) has a shape that focuses rays, especially a portion of a conic section.

8. Device according to any one of the preceding claims, **characterised in that** centring means (14) are provided in the recess (5) for centring the sensing means (2) inside the recess (5).

9. Device according to any one of the preceding claims, **characterised in that** the collision face (3) is provided with a protective means (19, 27) for protecting against wear.

10. Device according to claim 9, **characterised in that** there is used as the protective means a plate made of a wear-resistant material (19), especially plastics or metal, that is provided with an opening (28) and is so arranged that the recess (5) is arranged in the impact buffer (1) in the region of the opening (28).

11. Device according to claim 9, **characterised in that** the protective means comprises a coating (27) of a plastics or metal material on the collision face.

## Revendications

1. Dispositif pour agencer un moyen de détection (2) sur un véhicule (23, 24), comprenant un tampon de télescopage (1) en un matériau élastique, qui présente une surface d'impact (3) prévue pour une collision avec un obstacle, et un évidement (5) qui traverse la surface d'impact (3) et est adapté au montage du moyen de détection (2) derrière la surface d'impact (3) à l'encontre de la direction de collision (4), l'évidement (5) traversant complètement le tampon de télescopage (1) à l'encontre de la direction de collision (4), **caractérisé en ce que** sur le côté du tampon de télescopage (1), qui est opposé à celui où se trouve la surface d'impact (3), il est prévu une surface de montage (10) pour le montage sur le véhicule (23, 24), surface de montage dans laquelle est prévue un décrochement en gradin (11) qui entoure au moins partiellement l'évidement (5) et permet de recevoir un flasque de montage (12) du moyen de détection (2).

2. Dispositif selon la revendication 1, **caractérisé en ce que** la dimension intérieure de l'évidement (5) est supérieure aux dimensions extérieures du moyen de détection (2).

3. Dispositif selon l'une des revendications précédentes, **caractérisé en ce que** l'évidement (5) se rétrécit à partir de la surface d'impact (3) à l'encontre de la direction de collision (4).

4. Dispositif selon l'une des revendications précédentes, **caractérisé en ce que** l'évidement (5) présente, dans la zone de la surface d'impact (3), un chanfrein périphérique ou un rayon (7) périphérique.

5. Dispositif selon l'une des revendications précédentes, **caractérisé en ce qu'**il est prévu un évidement (8) en forme de canal pour recevoir un câble de raccordement électrique (9) pour le moyen de détection (2).

6. Dispositif selon l'une des revendications précédentes, **caractérisé en ce que** dans la zone du décrochement en gradin (11) sont prévus des moyens d'arrêt de rotation (16, 17, 21, 31) pour empêcher une rotation du moyen de détection (2) par rapport au tampon de télescopage (1).

7. Dispositif selon l'une des revendications précédentes, **caractérisé en ce que** l'évidement (5) présente au moins en partie un contour de concentration de faisceau de rayonnement, notamment une partie de section conique.

8. Dispositif selon l'une des revendications précédentes, **caractérisé en ce que** dans l'évidement (5) sont prévus des moyens de centrage (14) pour centrer le moyen de détection (2) à l'intérieur de l'évidement (5).

9. Dispositif selon l'une des revendications précédentes, **caractérisé en ce que** la surface d'impact (3) est pourvue d'un moyen de protection (19, 27) à l'encontre de l'abrasion.

10. Dispositif selon la revendication 9, **caractérisé en ce qu'**en guise de moyen de protection, on utilise une plaque munie d'un passage (28) et réalisée en un matériau (19) résistant à l'abrasion, notamment une matière plastique ou un métal, la plaque étant agencée de façon à ce que l'évidement (5) dans le tampon de télescopage (1) soit placé dans la zone du passage (28).

11. Dispositif selon la revendication 9, **caractérisé en ce que** le moyen de protection est formé par un revêtement (27) de la surface d'impact avec un matériau du type matière plastique ou métal.
